# EUROPEAN PATENT APPLICATION

(11) **EP 2 521 008 A2**
(43) Date of publication of application: **07.11.2012**
(21) Application number: 12158990.7
(22) Date of filing: 12.03.2012
(51) Int. Cl.: G06F 3/023, G06F 3/048

(54) **Apparatus and method for inputting texts in portable terminal**

(30) Priority: 03.05.2011 KR 20110041962
(71) Applicant: Samsung Electronics Co., Ltd., Suwon-si, Gyeonggi-do, 443-742 (KR)
(72) Inventor: Jo, Dae-Young, Gyeonggi-do (KR); Jang, Kyu-Jae, Gyeonggi-do (KR); Min, Jung-Sik, Gyeonggi-do (KR)
(74) Representative: Jenkins, Richard Gavin

(57) **Abstract**

An apparatus and method input text by using a text icon in a portable terminal. The method includes mapping a text to an image and registering the mapping result as a text icon, determining whether a long touch is detected for an input window in a text input mode, upon detecting the long touch for the input window in the text input mode, displaying a popup window including a pre-registered text icon list onto a screen, selecting one text icon from the pre-registered text icon list included in the popup window, and inputting the text mapped to the selected text icon to the input window.

## Description

### TECHNICAL FIELD OF THE INVENTION

The present invention relates to a portable terminal. More particularly, the present invention relates to an apparatus and method for inputting a text by using a text icon in the portable terminal.

### BACKGROUND OF THE INVENTION

In general, a user of a portable terminal uses a keypad provided by the terminal to input a text. That is, the user inputs a desired text by pressing keys corresponding to the text to be input. When inputting the text, the user may press a wrong key and thus input an undesired text, and several steps may be required for mode transition among a plurality of keypad modes.

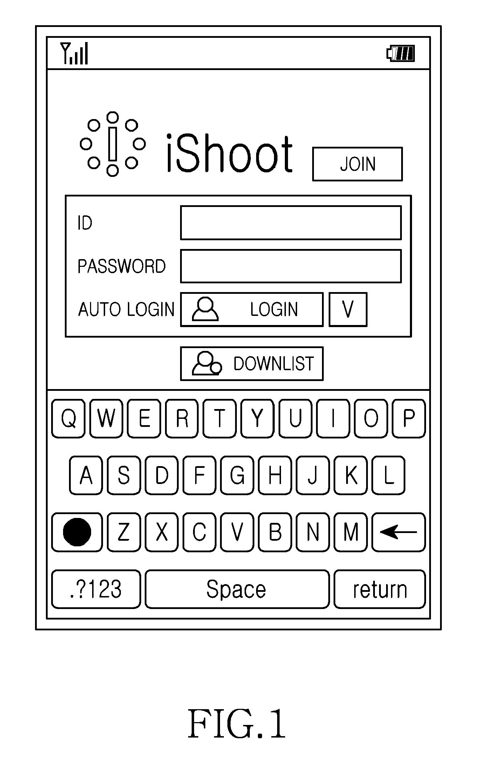

For example, when an application and other Internet sites are used by using the portable terminal, as illustrated in FIG. 1, the user may be requested to input an e-mail address to log in. In this case, the user has to perform several steps of keypad mode transition to input the e-mail address. If the e-mail address is 'ha38317@hanmail.net', the user of the portable terminal has to first switch a Korean keypad to an English keypad, then change the English keypad to a numeric keypad, then change the numeric keypad to a sign keypad, and then change the sign keypad to the English keypad.

As such, the conventional text input method in the portable terminal requires a complex procedure, and thus has a problem in that a great time is required to input text.

### SUMMARY OF THE INVENTION

To address the above-discussed deficiencies of the prior art, it is a primary object to provide at least the advantages described below. Accordingly, an aspect of the present disclosure is to provide an apparatus and method for inputting a text by using a text icon in a portable terminal.

Another aspect of the present disclosure is to provide an apparatus and method for correctly inputting a text by decreasing a text input time with a simple procedure (e.g., two times of touch) in a portable terminal.

Another aspect of the present disclosure is to provide an apparatus and method for mapping a text to an image and registering the mapping result as a text icon, and upon detecting a long touch for an input window in a text input mode, for displaying a popup window including a pre-registered text icon list, and upon selecting one of text icons in the list, for inputting a text mapped to the selected text icon to the input window in a portable terminal.

In accordance with an aspect of the present disclosure, a text input method in a portable terminal is provided. The method includes mapping a text to an image and registering the mapping result as a text icon, determining whether a long touch is detected for an input window in a text input mode, upon detecting the long touch for the input window in the text input mode, displaying a popup window including a pre-registered text icon list onto a screen, selecting one text icon from the pre-registered text icon list included in the popup window, and inputting the text mapped to the selected text icon to the input window.

In accordance with another aspect of the present disclosure, a text input apparatus in a portable terminal is provided. The apparatus includes a text icon registration and management unit for mapping a text to an image and registering the mapping result as a text icon, an input unit for determining whether a long touch is detected for an input window in a text input mode, and a display unit for displaying a popup window including a pre-registered text icon list onto a screen upon detecting the long touch for the input window in the text input mode, wherein if one text icon is selected from the pre-registered text icon list included in the popup window, the text icon registration and management unit inputs a text mapped to the selected text icon to the input window.

Also, the present disclosure provides a text input method in a portable terminal comprising, upon a detecting a touch of an input window, displaying a popup window including a registered text icon list onto a screen, selecting one text icon from a pre-registered text icon list included in the popup window, and inputting a text mapped to the selected text icon to the input window.

In some embodiments, the method further comprises, before the inputting of the text searching for the text mapped to the selected text icon and deleting the displayed popup window from the screen.

Preferably, a specific number of text icons in the pre-registered text icon list are displayed concurrently through the popup window, and the remaining text icons are displayed through a page scroll function.

Preferably, the method further comprises, upon selecting a text icon registration menu, displaying the input window onto the screen, inputting the text to be mapped to the text icon to be registered, through the input window displayed on the screen, upon completing the inputting of the text, displaying an image list onto the screen, and selecting an image to be mapped to the text icon to be registered from the image list displayed on the screen.

Also, the present disclosure provides a text input apparatus in a portable terminal comprising a display unit, under control of a controller, for displaying a popup window including a pre-registered text icon list onto a screen upon detecting a touch of the input window, and a text icon registration and management unit for inputting a text mapped to a selected text icon to the input window if one text icon is selected from the pre-registered text icon list included in the popup window.

Preferably, wherein the text icon registration and management unit searches for a text mapped to the selected text icon and wherein if one text icon is selected from the pre-registered text icon list included in the popup window, the display unit deletes the displayed popup window from the screen.

Preferably, a specific number of text icons in the pre-registered text icon list are displayed concurrently through the popup window, and the remaining text icons are displayed through a page scroll function.

Preferably, a specific number of text icons in the pre-registered text icon list are displayed concurrently through the popup window.

Preferably the display unit is further configured to display the input window onto the screen upon receiving a selection of a text icon registration menu, the text icon registration and management unit is further configured to receive text inputs to be mapped to the text icon to be registered, through the input window displayed on the screen, the display unit is further configured to display an image list on the screen upon completion of the text inputs, and the text icon registration and management unit is further configured to receive a selection of an image to be mapped to the text icon to be registered from the image list displayed on the screen.

Preferably, the text icon registration and management unit is further configured to receive the image to be mapped to the text icon to be registered from a camera configured to capture the image.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

The above and other aspects, features and advantages of certain exemplary embodiments of the present invention will be more apparent from the following detailed description taken in conjunction with the accompanying drawings, in which:

FIG. 1 illustrates an example of a conventional text input method in a portable terminal;

FIG. 2 illustrates a structure of a portable terminal according to an exemplary embodiment of the present disclosure;

FIG. 3 illustrates a method for inputting a text on the basis of a pre-registered text icon in a portable terminal according to an exemplary embodiment of the present disclosure;

FIG. 4 illustrates a text icon registration method for inputting a text in a portable terminal according to an exemplary embodiment of the present disclosure; and

FIG. 5 illustrates a method for inputting a text on the basis of a pre-registered text icon in a portable terminal according to an exemplary embodiment of the present disclosure.

### DETAILED DESCRIPTION OF THE INVENTION

Exemplary embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on user's or operator's intension and usage. That is, the terms used herein must be understood based on the descriptions made herein.

The present disclosure described hereinafter relates to a method for inputting a text by using a text icon in a portable terminal.

In the following description, the portable terminal is a terminal capable of inputting a text. Preferably, the present disclosure is applicable to all information communication devices and multimedia devices such as a mobile communication terminal having a built-in communication function, a mobile phone, a digital broadcasting terminal, a Personal Digital Assistants (PDA), a smart phone, an International Mobile Telecommunication 2000 (IMT-2000) terminal, a Code Division Multiple Access (CDMA) terminal, a Global Standard for Mobile Communication (GSM) terminal, a Wideband Code Division Multiple Access (WCDMA) terminal, a High Speed Downlink Packet Access (HSDPA) terminal, a World Interoperability for Microwave Access (Wimax) terminal, a Universal Mobile Telecommunication Service (UMTS) terminal, etc.

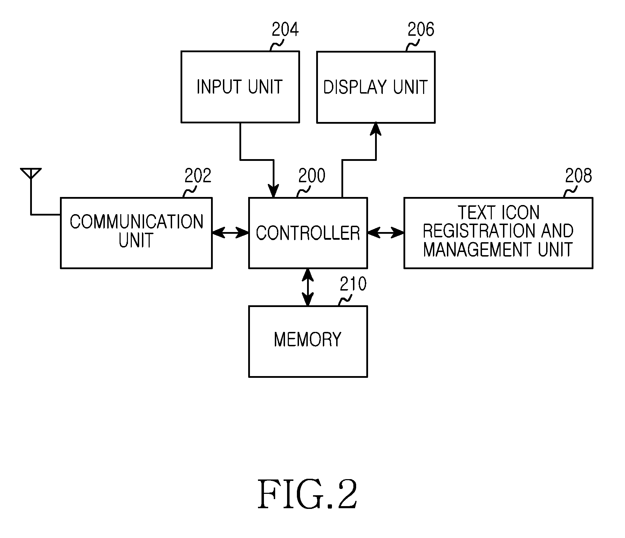

FIG. 2 illustrates a structure of a portable terminal according to an exemplary embodiment of the present disclosure.

The portable terminal includes a controller 200, a communication unit 202, an input unit 204, a display unit 206, a text icon registration and management unit 208, and a memory 210.

Referring to FIG. 2, the controller 200 provides overall control to the portable terminal. According to the present disclosure, the controller 200 controls a function for registering a text icon, for selecting the text icon in a text input mode, and for inputting a text mapped to the text icon to an input window.

The communication unit 202 performs a function for transmitting and receiving a radio signal which is input and output through an antenna. For example, in case of transmission, the communication unit 202 performs a function for up-converting a baseband signal to be transmitted into a Radio Frequency (RF) signal and transmitting the RF signal through an antenna, and in case of reception, the communication unit 202 performs a function for down-converting an RF signal received through an antenna into a baseband signal and restoring data by performing down-converting.

The input unit 204 includes numeral key buttons and a plurality of function key buttons to provide the controller 200 with key button input data corresponding to a key button pressed by a user.

The display unit 206 displays information such as state information, which is generated while the portable terminal operates, a limited number of characters, a large volume of moving and still pictures, etc. The display unit 206 can be configured with a touch screen, and in this example, the display unit 206 can detect a touch of the user to detect a coordinate of an area at which the touch occurs, and can provide the detected coordinate to the controller 200.

The text icon registration and management unit 208 performs a function for mapping a text to an image and registers the mapping result as a text icon, and upon detecting a long touch for the input window in a text input mode, for displaying a popup window including a pre-registered text icon list onto the screen, and upon selecting one the text icons, for inputting a text mapped to the selected text icon to the input window.

The memory 210 stores a microcode of a program for processing and control of the controller 200, a variety of reference data, temporary data that is generated while programs are performed, and a variety of rewritable data. In particular, the memory 210 stores the registered text icon.

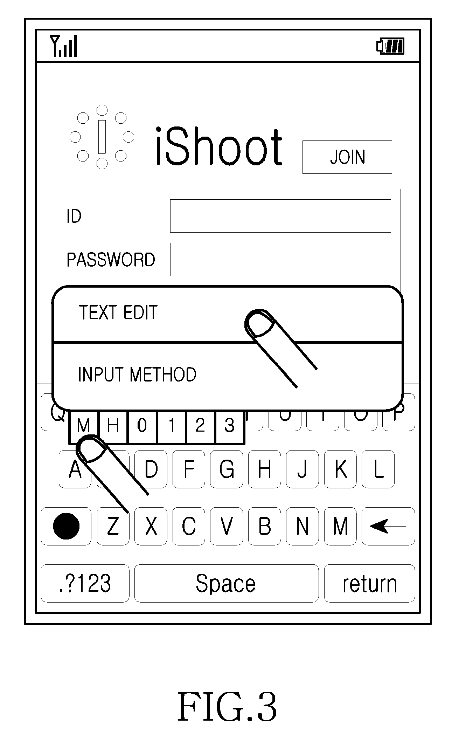

FIG. 3 illustrates a method for inputting a text on the basis of a pre-registered text icon in a portable terminal according to an exemplary embodiment of the present disclosure.

Referring to FIG. 3, the terminal maps a text to an image and registers the mapping result as a text icon, and upon detecting a long touch for an input window in a text input mode, displays a popup window including a pre-registered text icon list onto a screen, and upon selecting one of the text icons, inputs a text mapped to the selected text icon to the input window.

For example, the terminal can map an e-mail address of 'ha38317@hanmail.net' to a text icon of a character image of 'M' and map a home address of '25^{th} floor, Digital Research Center, Samsung Electronics Co., Ltd., Maetan 3-dong, Yeongtong-gu, Suwon-si, Gyeonggi-do, Korea' to a text icon of a character image of 'H' and then store and register the mapping result into a memory. In addition, the terminal can map a greeting message of 'Hello, this is Jo, DeaYong working at the H/W development group 2 in U.S.A.' to a numeric image of '4' and map other desired texts to text icons of various images and then store and register the mapping result.

Accordingly, upon detecting a long touch for an input window in a text input mode, the terminal can display a popup window including the pre-registered text icon list onto a screen. In order to input an e-mail address to the input window when using an application and other Internet sites, the user can select a text icon of a character image of 'M' from the text icon list displayed on the screen through the popup window. In this example, the terminal can search for an e-mail address of 'ha38317@hanmail.net' mapped to the selected text icon of the character image of 'M' from the memory and then can input the e-mail address to the input window.

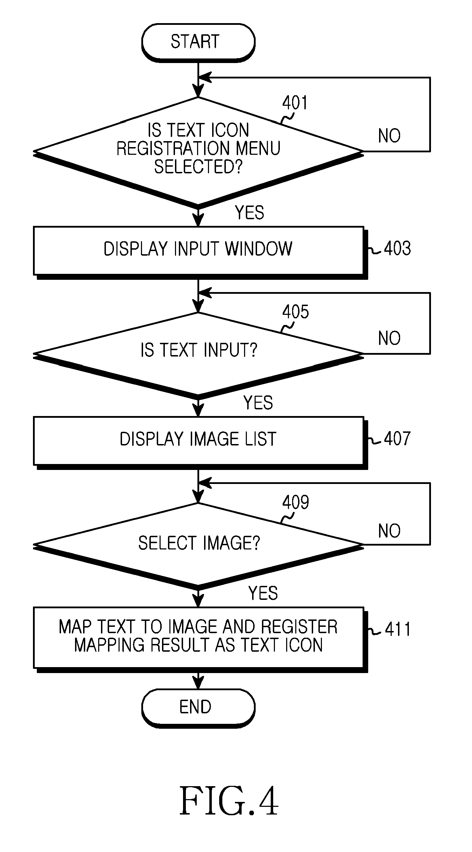

FIG. 4 illustrates a text icon registration method for inputting a text in a portable terminal according to an exemplary embodiment of the present disclosure.

Referring to FIG. 4, the terminal determines whether a text icon registration menu is selected according to a user's key manipulation in step 401.

If it is determined in step 401 that the text icon registration menu is selected, proceeding to step 403, the terminal displays an input window onto a screen to receive an input of a text to be mapped to a text icon to be registered.

In step 405, the terminal determines whether the text is input through the input window displayed on the screen.

If it is determined in step 405 that the text is input through the input window displayed on the screen, proceeding to step 407, the terminal displays an image list onto the screen to select an image to be mapped to the text to be registered. Herein, the image list includes various images so that a user can select a desired image. Alternatively, as another method of selecting the image to be mapped to the text icon to be registered, the terminal can drive a camera to acquire an image captured by a user's key manipulation. In this example, steps 407 and 409 can be omitted.

In step 409, the terminal determines whether one image is selected from the image list displayed on the screen.

If it is determined in step 409 that one image is selected from the image list displayed on the screen, proceeding to step 411, the terminal maps the input text to the selected image and registers the mapping result as a text icon.

Thereafter, the procedure of FIG. 4 ends.

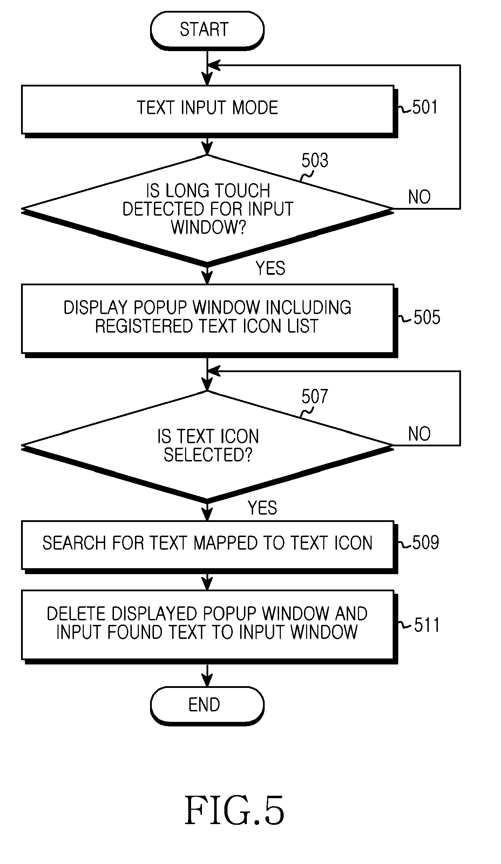

FIG. 5 illustrates a method for inputting a text on the basis of a pre-registered text icon in a portable terminal according to an exemplary embodiment of the present disclosure.

Referring to FIG. 5, the terminal displays an input window onto a screen by entering a text input mode according to a user's key manipulation in step 501.

In step 503, the terminal determines whether a long touch is detected for the input window displayed on the screen.

If it is determined in step 503 that the long touch is not detected for the input window displayed on the screen during a predetermined time period, returning to step 501, the subsequent steps are repeated.

Otherwise, if it is determined in step 503 that the long touch is detected for the input window displayed on the screen, proceeding to step 505, the terminal displays a popup window including a pre-registered text icon list onto the screen. In this example, the terminal can maintain the number of text icons displayed concurrently through the popup window to a specific number, and can display a hidden text icon by using a page scroll function. For example, if the number of pre-registered text icons is 10, the terminal can first display 1^{st} to 7^{th} text icons in sequence and then can display 8^{th} to 10^{th} icons by using the page scroll function.

In step 507, the terminal determines whether one text icon is selected from the pre-registered text icon list displayed on the screen.

If it is determined in step 507 that one text icon is selected from the pre-registered text icon displayed on the screen, proceeding to step 509, the terminal searches for a text mapped to the selected text icon.

In step 511, the terminal deletes the displayed popup window from the screen, and inputs the found text to the input window.

Thereafter, the procedure of FIG. 5 ends.

The present disclosure provides a method for mapping a text to an image and registering the mapping result as a text icon in a portable terminal, and upon detecting a long touch for an input window in a text input mode, displaying a popup window including a pre-registered text icon list onto a screen, and upon selecting one of the text icons, for inputting a text mapped to the selected text icon to the input window. Therefore, the present disclosure has an advantage in that a text input time is reduced by performing a simple procedure (e.g., two times of touch) and a text can be correctly input. In particular, since frequently used input information can be simply input without having to input or copy and paste all characters one by one whenever necessary, there is an advantage in that user convenience is improved.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method for text input in a portable terminal, the method comprising:
mapping text to an image to form a result and registering the result as a text icon;
determining whether a long touch is detected for an input window in a text input mode;
upon detecting the long touch for the input window in the text input mode, displaying a popup window including a pre-registered text icon list onto a screen;
receiving a selection of one text icon from the pre-registered text icon list included in the popup window; and
inputting the text mapped to the selected text icon into the input window.

2. The method of claim 1 further comprising:
before the inputting of the text, searching for a text mapped to the selected text icon and removing the popup window from the screen.

3. The method of claim 1, wherein a specific number of text icons in the pre-registered text icon list are displayed concurrently through the popup window and other text icons are displayed through a page scroll function.

4. The method of claim 1 further comprising:
upon receiving a selection of a text icon registration menu, displaying the input window onto the screen;
receiving text inputs to be mapped to the text icon to be registered, through the input window displayed on the screen;
upon completion of the text inputs, displaying an image list onto the screen; and
receiving a selection of an image to be mapped to the text icon to be registered from the image list displayed on the screen.

5. The method of claim 4, wherein receiving the selection of the image to be mapped to the text icon to be registered from the image list displayed on the screen comprises:
capturing the image using a camera of the portable terminal.

6. An apparatus for text input in a portable terminal, the apparatus comprising:
a text icon registration and management unit configured to map a text to an image to form a result and register the result as a text icon;
an input unit configured to determine whether a long touch is detected for an input window in a text input mode; and
a display unit configured to display a popup window including a pre-registered text icon list onto a screen upon detecting the long touch for the input window in the text input mode,
wherein responsive to receiving a selection of one text icon from the pre-registered text icon list included in the popup window, the text icon registration and management unit is further configured to input the text mapped to the selected text icon into the input window.

7. The apparatus of claim 6, wherein:
the text icon registration and management unit is further configured to search for a text mapped to the selected text icon, and
responsive to the one text icon being selected from the pre-registered text icon list included in the popup window, the display unit is further configured to remove the displayed popup window from the screen.

8. The apparatus of claim 6, wherein a specific number of text icons in the pre-registered text icon list are displayed concurrently through the popup window and other text icons are displayed through a page scroll function.

9. The apparatus of claim 6, wherein:
the display unit is further configured to display the input window onto the screen upon receiving a selection of a text icon registration menu,
the input unit is further configured to receive text inputs to be mapped to the text icon to be registered, through the input window displayed on the screen,
the display unit is further configured to display an image list on the screen upon completion of the text inputs, and
the input unit is further configured to receive a selection of an image to be mapped to the text icon to be registered from the image list displayed on the screen.

10. The apparatus of claim 9, wherein the input unit is further configured to receive the image to be mapped to the text icon to be registered from a camera configured to capture the image.

11. A method for text input in a portable terminal, the method comprising:
upon a detecting a touch of an input window, displaying a popup window including a pre-registered text icon list onto a screen;
receiving a selection of one text icon from the a pre-registered text icon list included in the popup window; and
inputting text mapped to the selected text icon into the input window.

12. The method of claim 11 further comprising:
before the inputting of the text, searching for the text mapped to the selected text icon and removing the displayed popup window from the screen.

13. The method of claim 11, wherein a specific number of text icons in the pre-registered text icon list are displayed concurrently through the popup window and other text icons are displayed through a page scroll function.

14. An apparatus for text input in a portable terminal, the apparatus comprising:
a display unit, under control of a controller, configured to display a popup window including a pre-registered text icon list onto a screen upon detecting a touch of the input window,
a text icon registration and management unit configured to input text mapped to a selected text icon into the input window in response to one text icon being selected from the pre-registered text icon list included in the popup window.

15. The apparatus of claim 14, wherein:
the text icon registration and management unit is further configured to search for a text mapped to the selected text icon, and
responsive to the one text icon being selected from the pre-registered text icon list included in the popup window, the display unit is further configured to remove the displayed popup window from the screen.
